# EUROPÄISCHE PATENTSCHRIFT

(11) **EP 1 179 466 B1**
(45) Veröffentlichungstag und Bekanntmachung des Hinweises auf die Patenterteilung: **11.04.2007**
(21) Anmeldenummer: 01119132.7
(22) Anmeldetag: 08.08.2001
(51) Int. Cl.: B62B 3/06, B66F 9/20

(54) **Flurförderzeug mit einer Lastaufnahmevorrichtung**
Industrial truck with a pick-up device for loads
Chariot de manutention avec un dispositif de ramassage de charges

(30) Priorität: 11.08.2000 DE 10039382
(43) Veröffentlichungstag der Anmeldung: 13.02.2002
(73) Patentinhaber: STILL S.A.R.L., 77100 Meaux (FR)
(72) Erfinder: Fabre, Christian, 60360 Auchy la Montagne (FR); Petitfrere, Claire, 60500 Chantilly (FR)
(74) Vertreter: Lang, Michael

(56) Entgegenhaltungen:
- DE-A- 4 306 680
- FR-A- 1 315 457
- US-A- 5 816 366

## Beschreibung

Die Erfindung betrifft ein Flurförderzeug, vorzugsweise Niederhubwagen oder Niederhubkommissionierer, mit einer Lastaufnahmevorrichtung und einer elektrischen Steuereinheit zum Steuern einer vertikalen Bewegung der Lastaufnahmevorrichtung, wobei mit der Steuereinheit mindestens ein Sollwert für die Hubhöhe der Lastaufnahmevorrichtung einstellbar ist und mit der Steuereinheit mindestens ein Bedienelement zum Steuern einer Aufwärtsbewegung der Lastaufnahmevorrichtung in Wirkverbindung steht. Die Erfindung betrifft ebenfalls ein Flurförderzeug, vorzugsweise Niederhubwagen oder Niederhubkommissionierer, mit einer anhebbaren Lastaufnahmevorrichtung und einer elektrischen Steuereinheit zum Steuern einer vertikalen Bewegung der Lastaufnahmevorrichtung, wobei mit der Steuereinheit mindestens ein Bedienelement zum Steuern einer Abwärtsbewegung der Lastaufnahmevorrichtung in Wirkverbindung steht.

Flurförderzeuge der genannten Art können als Mitgängerfahrzeuge, Fahrerstandfahrzeuge oder als Fahrersitzfahrzeuge ausgeführt sein. Die Flurförderzeuge weisen eine Lastaufnahmevorrichtung auf, mit der beispielsweise von Paletten gebildete Lasten angehoben werden können. Die zum Anheben der Lasten erforderliche Kraft wird in der Regel mittels eines Hydraulikzylinders erzeugt, der über ein elektrohydraulisches Pumpenaggregat mit Hydrauliköl versorgt wird. Insbesondere bei Flurförderzeugen mit geringer Hubhöhe, beispielsweise Niederhubwagen oder Niederhubkommissionierern, ist es üblich, dass dieses Pumpenaggregat mittels des Bedienelements zum Steuern der Aufwärtsbewegung ein- und ausgeschaltet werden kann. Um die Lastaufnahmevorrichtung abzusenken, kann ein mit dem Hydraulikzylinder verbundenes Ventil geöffnet werden, welches mit dem Bedienelement zum Steuern der Abwärtsbewegung angesteuert werden kann.

Das genaue Einstellen der gewünschten Hubhöhe erfordert von der Bedienperson ein gewisses Maß an Übung, da hierfür in der Regel keine Hilfsmittel vorhanden sind.

Aus der EP 0 812 799 A1 ist es bekannt, ein mindestens zweistufiges Schaltelement zum Steuern der Aufwärtsbewegung vorzusehen, wobei jeder Schaltstufe ein Sollwert für die Hubhöhe zugeordnet ist. Die Hubhöhe der Lastaufnahmevorrichtung stellt sich dann automatisch auf den gewählten Sollwert ein. Auch die Bedienung eines solchen zweistufigen Schalters erfordert von der Bedienperson ein hohes Maß an Geschick, insbesondere dann, wenn mit Handschuhen gearbeitet wird.

Der Erfindung liegt daher die Aufgabe zugrunde, ein Flurförderzeug zur Verfügung zu stellen, bei dem ein oder mehrere Sollwerte für die Auf- und Abwärtsbewegung in einfacher Weise angesteuert werden können.

Diese Aufgabe wird erfindungsgemäß dadurch gelöst, dass die Steuereinheit derart ausgeführt ist, dass in Abhängigkeit von der Betätigungsdauer des Bedienelements zum Steuern der Aufwärtsbewegung ein Sollwert für die Hubhöhe vorgebbar ist und die Aufwärtsbewegung bis zum Erreichen des Sollwerts fortgesetzt wird, wenn das Bedienelement nicht mehr betätigt wird. Dadurch, dass nur die Betätigungsdauer, nicht aber die Betätigungskraft für das Einstellen des Sollwerts maßgeblich ist, kann der Sollwert für die Hubhöhe auch mit Handschuhen fehlerfrei eingestellt werden.

Besonders zweckmäßig ist es, wenn die Steuereinheit derart ausgeführt ist, dass in Abhängigkeit von der Betätigungsdauer des Bedienelements zum Steuern der Aufwärtsbewegung wahlweise ein erster Sollwert oder ein zweiter Sollwert vorgebbar ist. In Abhängigkeit von der Betätigungsdauer des Bedienelements erkennt die Steuereinheit, welcher Sollwert für die Hubhöhe gewünscht wird. Die Lastaufnahmevorrichtung wird daraufhin automatisch bis zu dem gewählten Sollwert angehoben und dann in dieser Position angehalten. Die Hubbewegung wird bis zum Erreichen des Sollwerts auch dann fortgesetzt, wenn das Bedienelement nicht mehr betätigt ist. Die erfindungsgemäße Anordnung ermöglicht das Vorwählen von Sollwerten für die Hubhöhe in Abhängigkeit von der Betätigungszeit des hierfür vorgesehenen Bedienelements.

Die Steuereinheit wird auf einen ersten Sollwert eingestellt, wenn die Betätigungsdauer des Bedienelements zum Steuern der Aufwärtsbewegung kürzer ist, als eine in der Steuereinheit gespeicherte Zeitdauer. Auf einen zweiten Sollwert wird die Hubhöhe eingestellt, wenn die Betätigungsdauer des Bedienelements zum Steuern der Aufwärtsbewegung länger ist, als eine in der Steuereinheit gespeicherte Zeitdauer.

Vorzugsweise weist diese Zeitdauer einen Wert zwischen 0,5 Sekunden und 1 Sekunde auf.

Der erste Sollwert gibt für die Hubhöhe einen Wert zwischen 30 mm und 50 mm vor. Bei dieser Hubhöhe wird eine mit der Lastaufnahmevorrichtung aufgenommenen Palette geringfügig von der Fahrbahnoberfläche angehoben, so dass sie bewegt werden kann. Bei dieser geringen Hubhöhe ist es jedoch möglich, dass die Palette, z.B. bei unebener Fahrbahn, den Boden noch berührt.

Als zweiter Sollwert ist eine Hubhöhe zwischen 100 mm und 140 mm vorgegeben. Diese Hubhöhe wird zum Transport einer Palette über längere Fahrstrecken gewählt.

Beispielsweise bei Niederhubwagen und Niederhubkommissionierem gibt dieser zweite Sollwert die maximale Hubhöhe der Lastaufnahmevorrichtung vor.

Eine Aufwärtsbewegung der Lastaufnahmevorrichtung wird sofort gestoppt, wenn das Bedienelement nach dem Vorwählen eines Sollwerts ein zweites mal betätigt wird. Mit dieser Funktion kann die automatische Aufwärtsbewegung der Lastaufnahvorrichtung von der Bedienperson angehalten werden.

Gemäß einer zweckmäßigen Weiterbildung der Erfindung ist ein zweites Bedienelement zum Steuern einer Aufwärtsbewegung vorgesehen, wobei die Steuereinheit derart ausgeführt ist, dass während einer Betätigung des zweiten Bedienelements eine Aufwärtsbewegung stattfindet, sofern die maximale Hubhöhe noch nicht erreicht ist. Diese Ausbildung der Steuereinheit entspricht der klassischen Anordnung, bei der ein elektrohydraulisches Pumpenaggregat mittels des Bedienelements ein- und ausgeschaltet werden kann. Das zweite Bedienelement ermöglicht somit ein manuelles Steuern der Hubbewegung.

Die Aufgabe der Erfindung wird erfindungsgemäß auch dadurch gelöst, dass die Steuereinheit derart ausgeführt ist, dass in Abhängigkeit von der Betätigungsdauer des Bedienelements zum Steuern der Abwärtsbewegung ein vollständiges Absenken der Lastaufnahmevorrichtung vorgebbar ist und die Abwärtsbewegung bis zum Erreichen des Sollwerts fortgesetzt wird, wenn das Bedienelement nicht mehr betätigt wird. Mit diesem Bedienelement für die Absenkbewegung kann die Steuervorrichtung derart angesteuert werden, dass die Lastaufnahmevorrichtung automatisch vollständig abgesenkt wird. Die Aufmerksamkeit der Bedienperson wird damit nicht durch das Beobachten der Absenkbewegung der Lastaufnahmevorrichtung beansprucht, da sichergestellt ist, dass die Lastaufnahmevorrichtung in jedem Fall ihre tiefste Stellung erreicht.

Die Lastaufnahmevorrichtung wird vollständig abgesenkt, wenn die Betätigungsdauer des Bedienelements zum Steuern der Aufwärtsbewegung länger ist, als eine in der Steuereinheit gespeicherte vorgebbare Zeitdauer. Hierdurch können Fehlbedienungen, z.B. durch ein unbeabsichtigtes Drücken des Bedienelements, ausgeschlossen werden.

Bevorzugt weist die vorgebbare Zeitdauer einen Wert zwischen 0,5 Sekunden und 1,5 Sekunden auf.

Die Abwärtsbewegung der Lastaufnahmevorrichtung kann durch die Bedienperson gestoppt werden, wenn das Bedienelement nach dem Vorgeben eines vollständigen Absenkens der Lastaufnahmevorrichtung ein zweites mal betätigt wird. Hiermit kann die automatische Abwärtsbewegung der Lastaufnahmevorrichtung von der Bedienperson zu jedem beliebigen Zeitpunkt angehalten werden.

Gemäß einer vorteilhaften Weiterbildung ist ein zweites Bedienelement zum Steuern einer Abwärtsbewegung vorgesehen, wobei die Steuereinheit derart ausgeführt ist, dass während einer Betätigung des zweiten Bedienelements eine Abwärtsbewegung stattfindet, sofern die minimale Hubhöhe noch nicht erreicht ist. Mit diesem zweiten Bedienelement kann die Abwärtsbewegung der Lastaufnahmevorrichtung manuell gesteuert werden. Diese Funktion entspricht der klassischen Anordnung, bei der ein hydraulisches Ventil mittels des Bedienelements geöffnet und geschlossen werden kann.

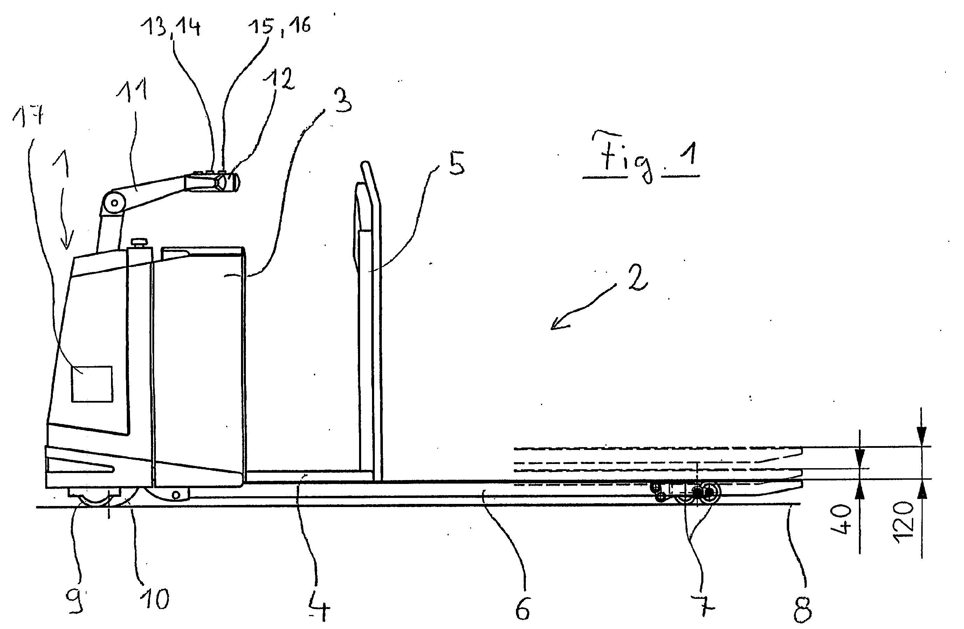

Weitere Vorteile und Einzelheiten der Erfindung werden anhand des in den schematischen Figuren dargestellten Ausführungsbeispiels näher erläutert. Dabei zeigt
- Figur 1: einen Niederhubkommissionierer,
- Figur 2: eine Anordnung der Bedienelemente für die vertikale Bewegung der Lastaufnahmevorrichtung.

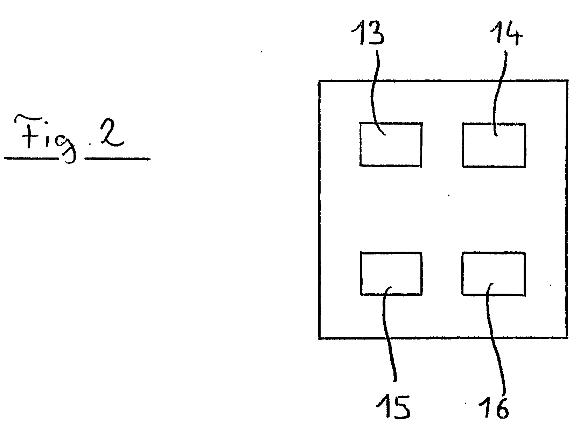

Figur 2 zeigt als erfindungsgemäßes Flurförderzeug einen Niederhubkommissionierer. Der Niederhubkommissionierer weist einen nicht anhebbaren Antriebsteil 1 und einen relativ zum Antriebsteil 1 anhebbaren Lastteil 2 auf. Der Lastteil 2 besteht im Wesentlichen aus einem Batteriefach 3, einer Fahrerstandplattform 4, einer Trennwand 5 und einer als Lastgabel ausgeführten Lastaufnahmevorrichtung 6. Der Lastteil 2 steht im Bereich der Lastaufnahmevorrichtung mit Lastrollen 7 auf der Fahrbahn 8 auf, wobei der Abstand der Lastrollen 7 zur Lastaufnahmevorrichtung 6 mittels eines nicht dargestellten Gestänges verändert werden kann. Der Antriebsteil 1 steht in diesem Ausführungsbeispiel mittels eines lenkbaren Antriebsrads 9 um zweier Schwenkrollen 10 auf der Fahrbahn 8 auf.

An dem Antriebsteil 1 ist weiterhin eine Lenkdeichsel 11 angeordnet, wobei durch Drehen der Lenkdeichsel 11 um eine im Wesentlichen vertikale Achse eine Lenkbewegung des Antriebsrads 9 gesteuert werden kann. Im Bereich eines Deichselkopfes 12 der Lenkdeichsel befinden sich Bedienelemente für die verschiedenen Funktionen des Niederhubkommissionierers, wobei auf der Oberseite des Deichselkopfes 12 insgesamt vier Bedienelemente 13-16 zum Steuern der vertikalen Bewegung des Lastaufnahmemittels angeordnet sind. Diese Bedienelemente 13-16 stehen mit einer im Antriebsteil 1 angeordneten Steuereinheit 17 in Wirkverbindung.

In der Steuereinheit 17 sind zwei Sollwerte für die Hubhöhe der Lastaufnahmevorrichtung 6 gespeichert, auf welche die Lastaufnahmevorrichtung 6 bei entsprechender Betätigung der Bedienelemente 13 bis 16 automatisch eingestellt wird. Der erste Sollwert entspricht, ausgehend von der tiefsten Stellung der Lastaufnahmevorrichtung 6, einer Hubhöhe von 40 mm. Der zweite Sollwert entspricht einer Hubhöhe von 120 mm und damit der maximalen Hubhöhe. Die Positionen der Lastaufnahmevorrichtung 6 bei den beiden Sollwerten ist mit gestrichelten Linien verdeutlicht.

In Figur 2 ist die Anordnung der als Drucktasten ausgeführten Bedienelemente 13-16 für die Lastaufnahmevorrichtung 6 dargestellt. Die in der Steuervorrichtung 17 gespeicherte Funktionsweise ist folgende:

Mit dem Bedienelement 13 kann eine automatische Hubfunktion betätigt werden. Wenn das Bedienelement 13 kurz, z.B. ca. 0,5 Sekunden gedrückt und anschließend wieder losgelassen wird, hebt sich die Lastaufnahmevorrichtung 6 automatisch auf eine Hubhöhe von 40 mm an. Wenn das Bedienelement 13 lang, z.B. ca. 1 Sekunde betätigt wird, hebt sich die Lastaufnahmevorrichtung automatisch auf eine Hubhöhe von 120 mm an. Um zwischen einem kurzen und einem langen Betätigen unterscheiden zu können, ist in der Steuervorrichtung 17 eine Zeitdauer gespeichert, die z.B. einen Wert von 0,8 Sekunden aufweist. Mit dieser gespeicherten Zeitdauer wird die tatsächliche Betätigungsdauer des Bedienelements 13 verglichen und von der Steuervorrichtung 17 der entsprechende Sollwert für die Hubhöhe gewählt. Die automatische Aufwärtsbewegung der Lastaufnahmevorrichtung 6 kann gestoppt werden, wenn das Bedienelement 13 ein zweites mal betätigt wird, bevor die Lastaufnahmevorrichtung 6 den gewählten Sollwert für die Hubhöhe erreicht hat.

Mit dem Bedienelement 14 kann eine automatische Absenkfunktion betätigt werden. Wenn das Bedienelement 14 länger als eine in der Steuervorrichtung 17 gespeicherte Zeitdauer gedrückt wird, senkt sich das Lastaufnahmemittel 6 automatisch vollständig ab. Die gespeicherte Zeitdauer kann beispielsweise ebenfalls einen Wert von 0,8 Sekunden aufweisen, kann jedoch auch auf einen anderen Wert eingestellt sein. Gemäß einer Sicherheitsfunktion kann die automatische Abwärtsbewegung der Lastaufnahmevorrichtung 6 kann gestoppt werden, wenn das Bedienelement 14 ein zweites mal betätigt wird, bevor die Lastaufnahmevorrichtung ihre tiefste Stellung erreicht hat.

Mit den Bedienelementen 15 und 16 kann die Bedienperson die vertikale Bewegung der Lastaufnahmevorrichtung 6 in herkömmlicher Weise manuell steuern. Bei Betätigung des Bedienelements 15 wird die Lastaufnahmevorrichtung 6 angehoben, bis das Bedienelement 15 wieder losgelassen wird oder die obere Endstellung erreicht ist. Analog hierzu wird bei Betätigung des Bedienelements 16 die Lastaufnahmevorrichtung 6 abgesenkt, bis das Bedienelement 16 wieder losgelassen wird oder die tiefste Stellung der Lastaufnahmevorrichtung erreicht ist.

## Patentansprüche

1. Flurförderzeug, vorzugsweise Niederhubwagen oder Niederhubkommissionierer, mit einer Lastaufnahmevorrichtung (6) und einer elektrischen Steuereinheit (17) zum Steuern einer vertikalen Bewegung der Lastaufnahmevorrichtung (6), wobei mit der Steuereinheit (17) mindestens ein Sollwert für die Hubhöhe der Lastaufnahmevorrichtung (6) einstellbar ist und mit der Steuereinheit (17) mindestens ein Bedienelement (13) zum Steuern einer Aufwärtsbewegung der Lastaufnahmevorrichtung (6) in Wirkverbindung steht, **dadurch gekennzeichnet, dass** die Steuereinheit (17) derart ausgeführt ist, dass in Abhängigkeit von der Betätigungsdauer des Bedienelements (13) zum Steuern der Aufwärtsbewegung ein Sollwert für die Hubhöhe vorgebbar ist und die Aufwärtsbewegung bis zum Erreichen des Sollwerts fortgesetzt wird, wenn das Bedienelement nicht mehr betätigt wird.

2. Flurförderzeug nach Anspruch 1, **dadurch gekennzeichnet, dass** in Abhängigkeit von der Betätigungsdauer wahlweise ein erster Sollwert oder ein zweiter Sollwert vorgebbar ist.

3. Flurförderzeug nach Anspruch 1 oder 2, **dadurch gekennzeichnet, dass** die Hubhöhe auf den ersten Sollwert eingestellt wird, wenn die Betätigungsdauer des Bedienelements (13) zum Steuern der Aufwärtsbewegung kürzer ist, als eine in der Steuereinheit (17) gespeicherte Zeitdauer.

4. Flurförderzeug nach einem der Ansprüche 1 bis 3, **dadurch gekennzeichnet, dass** die Hubhöhe auf den zweiten Sollwert eingestellt wird, wenn die Betätigungsdauer des Bedienelements (13) zum Steuern der Aufwärtsbewegung länger ist, als eine in der Steuereinheit (17) gespeicherte Zeitdauer.

5. Flurförderzeug nach Anspruch 3 oder 4, **dadurch gekennzeichnet, dass** die Zeitdauer einen Wert zwischen 0,5 Sekunden und 1 Sekunde aufweist.

6. Flurförderzeug nach einem der Ansprüche 1 bis 5, **dadurch gekennzeichnet, dass** der erste Sollwert eine Hubhöhe zwischen 30 mm und 50 mm vorgibt.

7. Flurförderzeug nach einem der Ansprüche 1 bis 6, **dadurch gekennzeichnet, dass** der zweite Sollwert eine Hubhöhe zwischen 100 mm und 140 mm vorgibt.

8. Flurförderzeug nach einem der Ansprüche 1 bis 7, **dadurch gekennzeichnet, dass** der zweite Sollwert die maximale Hubhöhe der Lastaufnahmevorrichtung (6) vorgibt.

9. Flurförderzeug nach einem der Ansprüche 1 bis 8, **dadurch gekennzeichnet, dass** die Aufwärtsbewegung der Lastaufnahmevorrichtung (6) gestoppt wird, wenn das Bedienelement (13) nach dem Vorwählen eines Sollwerts ein zweites mal betätigt wird.

10. Flurförderzeug nach einem der Ansprüche 1 bis 9, **dadurch gekennzeichnet, dass** ein zweites Bedienelement (15) zum Steuern einer Aufwärtsbewegung vorgesehen ist, wobei die Steuereinheit (17) derart ausgeführt ist, dass - bis zu einem Erreichen der maximalen Hubhöhe - während einer Betätigung des zweiten Bedienelements (15) eine Aufwärtsbewegung stattfindet, sofern die maximale Hubhöhe noch nicht erreicht ist.

11. Flurförderzeug, vorzugsweise Niederhubwagen oder Niederhubkommissionierer, mit einer anhebbaren Lastaufnahmevorrichtung (6) und einer elektrischen Steuereinheit (17) zum Steuern einer vertikalen Bewegung der Lastaufnahmevorrichtung (6), wobei mit der Steuereinheit (17) mindestens ein Bedienelement (14) zum Steuern einer Abwärtsbewegung der Lastaufnahmevorrichtung (6) in Wirkverbindung steht, **dadurch gekennzeichnet, dass** die Steuereinheit (17) derart ausgeführt ist, dass in Abhängigkeit von der Betätigungsdauer des Bedienelements (14) zum Steuern der Abwärtsbewegung ein vollständiges Absenken der Lastaufnahmevorrichtung (6) vorgebbar ist und die Abwärtsbewegung bis zum Erreichen des Sollwerts fortgesetzt wird, wenn das Bedienelement nicht mehr betätigt wird.

12. Flurförderzeug nach Anspruch 11, **dadurch gekennzeichnet, dass** die Lastaufnahmevorrichtung (6) vollständig abgesenkt wird, wenn die Betätigungsdauer des Bedienelements (14) zum Steuern der Abwärtsbewegung länger ist, als eine in der Steuereinheit (17) gespeicherte vorgebbare Zeitdauer.

13. Flurförderzeug nach Anspruch 12, **dadurch gekennzeichnet, dass** die vorgebbare Zeitdauer einen Wert zwischen 0,5 Sekunden und 1,5 Sekunden aufweist.

14. Flurförderzeug nach einem der Ansprüche 11 bis 13, **dadurch gekennzeichnet, dass** die Abwärtsbewegung der Lastaufnahmevorrichtung (6) gestoppt wird, wenn das Bedienelement (14) nach dem Vorgeben eines vollständigen Absenkens der Lastaufnahmevorrichtung (6) ein zweites mal betätigt wird.

15. Flurförderzeug nach einem der Ansprüche 11 bis 14, **dadurch gekennzeichnet, dass** ein zweites Bedienelement (16) zum Steuern einer Abwärtsbewegung vorgesehen ist, wobei die Steuereinheit (17) derart ausgeführt ist, während einer Betätigung des zweiten Bedienelements (16) eine Abwärtsbewegung stattfindet, sofern die minimale Hubhöhe noch nicht erreicht ist.

16. Flurförderzeug, **gekennzeichnet durch** die Kombination eines der Ansprüche 1 bis 10 und eines der Ansprüche 11 bis 15.

## Claims

1. Industrial truck, preferably low-lift pallet truck or low-lift order picker, with a load pick-up device (6) and an electrical control unit (17) for controlling a vertical movement of the load pick-up device (6), the control unit (17) being used to adjust at least one desired value for the lifting height of the load pick-up device (6), and at least one operating unit (13) for controlling an upward movement of the load pick-up device (6) being operatively connected to the control unit (17), **characterized in that** the control unit (17) is designed such that it is possible to predetermine a desired value for the lifting height as a function of the duration of actuation of the operating element (13) for controlling the upward movement and the upward movement is continued until the desired value is reached if the operating element is no longer actuated.

2. Industrial truck according to Claim 1, **characterized in that** optionally a first desired value or a second desired value can be predetermined as a function of the duration of actuation.

3. Industrial truck according to Claim 1 or 2, **characterized in that** the lifting height is adjusted to the first desired value if the duration of actuation of the operating element (13) for controlling the upward movement is shorter than a period stored in the control unit (17).

4. Industrial truck according to one of Claims 1 to 3, **characterized in that** the lifting height is adjusted to the second desired value if the duration of actuation of the operating element (13) for controlling the upward movement is longer than a period stored in the control unit (17).

5. Industrial truck according to Claim 3 or 4, **characterized in that** the period has a value of between 0.5 second and 1 second.

6. Industrial truck according to one of Claims 1 to 5, **characterized in that** the first desired value predetermines a lifting height of between 30 mm and 50 mm.

7. Industrial truck according to one of Claims 1 to 6, **characterized in that** the second desired value predetermines a lifting height of between 100 mm and 140 mm.

8. Industrial truck according to one of Claims 1 to 7, **characterized in that** the second desired value predetermines the maximum lifting height of the load pick-up device (6).

9. Industrial truck according to one of Claims 1 to 8, **characterized in that** the upward movement of the load pick-up device (6) is stopped if the operating element (13) is actuated a second time after a desired value has been preselected.

10. Industrial truck according to one of Claims 1 to 9, **characterized in that** a second operating element (15) for controlling an upward movement is provided, the control unit (17) being designed such that, until the maximum lifting height is reached, an upward movement takes place during actuation of the second operating element (15) if the maximum lifting height has not yet been reached.

11. Industrial truck, preferably low-lift pallet truck or low-lift order picker, with a load pick-up device (6) which can be raised and an electrical control unit (17) for controlling a vertical movement of the load pick-up device (6), at least one operating element (14) for controlling a downward movement of the load pick-up device (6) being operatively connected to the control unit (17), **characterized in that** the control unit (17) is designed such that it is possible to predetermine complete lowering of the load pick-up device (6) as a function of the duration of actuation of the operating element (14) for controlling the downward movement and the downward movement is continued until the desired value is reached if the operating element is no longer actuated.

12. Industrial truck according to Claim 11, **characterized in that** the load pick-up device (6) is lowered completely if the duration of actuation of the operating element (14) for controlling the downward movement is longer than a predeterminable period stored in the control unit (17).

13. Industrial truck according to Claim 12, **characterized in that** the predeterminable period has a value of between 0.5 second and 1.5 seconds.

14. Industrial truck according to one of Claims 11 to 13, **characterized in that** the downward movement of the load pick-up device (6) is stopped if the operating element (14) is actuated a second time after complete lowering of the load pick-up device (6) has been predetermined.

15. Industrial truck according to one of Claims 11 to 14, **characterized in that** a second operating element (16) for controlling a downward movement is provided, the control unit (17) being designed such that a downward movement takes place during actuation of the second operating element (16) if the minimum lifting height has not yet been reached.

16. Industrial truck, **characterized by** the combination of one of Claims 1 to 10 and one of Claims 11 to 15.

## Revendications

1. Chariot de manutention, de préférence transpalette ou transpalette de préparation, comprenant un dispositif de prise de charge (6) et une unité de commande électrique (17) pour commander un mouvement vertical du dispositif de prise de charge (6), au moins une valeur de consigne pour la hauteur de levage du dispositif de prise de charge (6) pouvant être réglée avec l'unité de commande (17) et au moins un élément de commande (13) destiné à commander un mouvement ascendant du dispositif de prise de charge (6) étant en liaison active avec l'unité de commande (17), **caractérisé en ce que** l'unité de commande (17) est réalisée de telle sorte qu'il est possible de prédéfinir une valeur de consigne pour la hauteur de levage en fonction de la durée d'actionnement de l'élément de commande (13) destiné à commander le mouvement ascendant et le mouvement ascendant se poursuit jusqu'à atteindre la valeur de consigne lorsque l'élément de commande n'est plus actionné.

2. Chariot de manutention selon la revendication 1, **caractérisé en ce que**, suivant la durée d'actionnement, il est possible de prédéfinir au choix une première valeur de consigne où une deuxième valeur de consigne.

3. Chariot de manutention selon la revendication 1 ou 2, **caractérisé en ce que** la hauteur de levage est réglée sur la première valeur de consigne lorsque la durée d'actionnement de l'élément de commande (13) destiné à commander le mouvement ascendant est plus courte qu'une durée enregistrée dans l'unité de commande (17).

4. Chariot de manutention selon l'une des revendications 1 à 3, **caractérisé en ce que** la hauteur de levage est réglée sur la deuxième valeur de consigne lorsque la durée d'actionnement de l'élément de commande (13) destiné à commander le mouvement ascendant est plus longue qu'une durée enregistrée dans l'unité de commande (17).

5. Chariot de manutention selon la revendication 3 ou 4, **caractérisé en ce que** la durée présente une valeur entre 0,5 seconde et 1 seconde.

6. Chariot de manutention selon l'une des revendications 1 à 5, **caractérisé en ce que** la première valeur de consigne prédéfinit une hauteur de levage entre 30 mm et 50 mm.

7. Chariot de manutention selon l'une des revendications 1 à 6, **caractérisé en ce que** la deuxième valeur de consigne prédéfinit une hauteur de levage entre 100 mm et 140 mm.

8. Chariot de manutention selon l'une des revendications 1 à 7, **caractérisé en ce que** la deuxième valeur de consigne prédéfinit la hauteur de levage maximale du dispositif de prise de charge (6).

9. Chariot de manutention selon l'une des revendications 1 à 8, **caractérisé en ce que** le mouvement ascendant du dispositif de prise de charge (6) est arrêté lorsque l'élément de commande (13) est actionné une deuxième fois après avoir présélectionné une valeur de consigne.

10. Chariot de manutention selon l'une des revendications 1 à 9, **caractérisé en ce qu'**il est prévu un deuxième élément de commande (15) destiné à commander un mouvement ascendant, l'unité de commande (17) étant réalisée de telle sorte qu'un mouvement ascendant a lieu pendant un actionnement du deuxième élément de commande (15) jusqu'à atteindre la hauteur de levage maximale, sous réserve que la hauteur de levage maximale ne soit pas encore atteinte.

11. Chariot de manutention, de préférence transpalette ou transpalette de préparation, comprenant un dispositif de prise de charge soulevable (6) et une unité de commande électrique (17) pour commander un mouvement vertical du dispositif de prise de charge (6), au moins un élément de commande (14) destiné à commander un mouvement descendant du dispositif de prise de charge (6) étant en liaison active avec l'unité de commande (17), **caractérisé en ce que** l'unité de commande (17) est réalisée de telle sorte qu'il est possible de prédéfinir une descente complète du dispositif de prise de charge (6) en fonction de la durée d'actionnement de l'élément de commande (14) destiné à commander le mouvement descendant et le mouvement descendant se poursuit jusqu'à atteindre la valeur de consigne lorsque l'élément de commande n'est plus actionné.

12. Chariot de manutention selon la revendication 11, **caractérisé en ce que** le dispositif de prise de charge (6) est complètement descendu lorsque la durée d'actionnement de l'élément de commande (14) destiné à commander le mouvement descendant est plus longue qu'une durée pouvant être prédéfinie et enregistrée dans l'unité de commande (17).

13. Chariot de manutention selon la revendication 12, **caractérisé en ce que** la durée pouvant être prédéfinie présente une valeur entre 0,5 seconde et 1,5 seconde.

14. Chariot de manutention selon l'une des revendications 11 à 13, **caractérisé en ce que** le mouvement descendant du dispositif de prise de charge (6) est arrêté lorsque l'élément de commande (14) est actionné une deuxième fois après avoir prédéfini une descente complète du dispositif de prise de charge (6).

15. Chariot de manutention selon l'une des revendications 11 à 14, **caractérisé en ce qu'**il est prévu un deuxième élément de commande (16) destiné à commander un mouvement descendant, l'unité de commande (17) étant réalisée de telle sorte qu'un mouvement descendant a lieu pendant un actionnement du deuxième élément de commande (16) sous réserve que la hauteur de levage minimale ne soit pas encore atteinte.

16. Chariot de manutention, **caractérisé par** la combinaison de l'une des revendications 1 à 10 et de l'une des revendications 11 à 15.
